# EUROPEAN PATENT SPECIFICATION

(11) **EP 2 993 850 B1**
(45) Date of publication and mention of the grant of the patent: **28.06.2017**
(21) Application number: 15187270.2
(22) Date of filing: 14.07.2008
(51) Int. Cl.: H04L 27/26

(54) **METHOD FOR TRANSMITTING A SIGNAL**
VERFAHREN ZUM SENDEN EINES SIGNALS
PROCÉDÉ DE TRANSMISSION D'UN SIGNAL

(30) Priority: 12.07.2007 US 949512 P
(43) Date of publication of application: 09.03.2016
(62) Divisional of application: 08778782.6
(73) Proprietor: LG Electronics Inc., Seoul 07336 (KR)
(72) Inventor: MOON, Sang Chul, 137-724 SEOUL (KR); KO, Woo Suk, 137-724 SEOUL (KR)
(74) Representative: Cabinet Plasseraud

(56) References cited:
- DVB ORGANIZATION: "tam151.doc", DVB, DIGITAL VIDEO BROADCASTING, C/O EBU - 17A ANCIENNE ROUTE - CH-1218 GRAND SACONNEX, GENEVA - SWITZERLAND, 3 October 2003 (2003-10-03), XP017818443,

## Description

### Technical Field

The present invention relates to a method of transmitting/receiving a signal and an apparatus for transmitting/receiving a signal, and more particularly to a method of transmitting/receiving a signal and an apparatus for transmitting/receiving a signal, which are capable of improving data transmission efficiency.

### Background Art

As a digital broadcasting technology has been developed, users have received a high definition (HD) moving image. With continuous development of a compression algorithm and high performance of hardware, a better environment will be provided to the users in the future. A digital television (DTV) system can receive a digital broadcasting signal and provide a variety of supplementary services to users as well as a video signal and an audio signal.

With the development of the digital broadcasting technology, a requirement for a service such as a video signal and an audio signal is increased and the size of data desired by a user or the number of broadcasting channels is gradually increased. The document DVB ORGANIZATION: "tam151.doc", DVB, DIGITAL VIDEO BROADCASTING, C/O EBU - 17A ANCIENNE ROUTE - CH-1218 GRAND SACONNEX, GENEVA - SWITZERLAND, 3 October 2003 (2003-10-03), discloses that the DVB-T2 receiver recognizes the pattern of the first pilot to find out the FFT-size that has been used and it decodes therefore the next symbol P2 with less processing.

### Disclosure of Invention

### Technical Problem

However, in the existing signal transmitting/receiving method, it is difficult to cope with the increase in the size of data or the number of broadcasting channels. Accordingly, a requirement for a new signal transmitting/receiving technique, in which channel bandwidth efficiency is higher than that of the existing signal transmitting/ receiving method and cost necessary for configuring a signal transmitting/receiving network is low, is increased.

An object of the present invention is to provide an apparatus for transmitting/ receiving a signal and a method of transmitting/receiving a signal, which are capable of readily detecting and restoring a transmitted signal.

Another object of the present invention is to provide an apparatus for transmitting/ receiving a signal and a method of transmitting/receiving a signal, which are capable of efficiently receiving the signal even when the signal is transmitted with high channel bandwidth efficiency. Any occurrence of the term "embodiment" in the description has to be considered as an "aspect of the invention", the invention being defined in the appended independent claims.

### Technical Solution

To achieve the object of the present invention, the present invention provides a method of transmitting a signal, the method including A method of transmitting a signal including outputting a plurality of service data units according to frequency bands, mapping the output service data units to symbols and modulating the service data units, inserting first pilot signals and second pilot signalsinto frames including the modulated service data units and transmitting the frames including the first pilot signals and the second pilot signals such that a time difference occurs between radio frequency (RF) channels.

The first pilot signals and the second pilot signals may be inserted such that the time difference occurs in the frames.

In another aspect of the present invention, the present invention provides a method of receiving a signal including receiving signal frames temporally shifted via a plurality of radio frequency (RF) channels, demodulating one of the signal frames using first pilot signals and second pilot signals included in the signal frames and compensating for the channel of the demodulated signal frame and decoding service contents from the signal frame of which the channel is compensated for.

The compensating of the channel includes acquiring the channel information of the signal frames using the first pilot signal and the second pilot signal included in the signal frames and compensating for the signals included in the received signal frames using the channel information.

Using the structure of the first pilot signals, the channel information for of the second pilot signals among the signals which follow the first pilot signals can be obtained.

In another aspect of the present invention, the present invention provides an apparatus for receiving a signal including a reception unit receiving signal frames temporally shifted via a plurality of radio frequency (RF) channels, a synchronization unit acquiring first pilot signals and second pilot signalsincluded in the signal frames, a demodulator demodulating one of the signal frames using the first pilot signals and the second pilot signals, an equalizer compensating for the channel of the demodulated signal frame and a service decoder decoding service contents from the signal frame of which the channel is compensated for.

The equalizer acquires the channel information of the signal frames using the first pilot signals and the second pilot signals included in the signal frames and compensates for the channel of the signal frame using the channel information.

Orthogonal frequency division multiplex (OFDM) symbols included in the signal frames include symbol index information. The service decoder identifies the position of service data using the symbol index information and decodes the identified service data.

In another aspect of the present invention, the present invention provides an apparatus for transmitting a signal including a frequency splitter outputting a plurality of service data units according to frequency bands, a modulator modulating the output service data units, an inserter inserting first pilot signals and second pilot signals into frames including the modulated service data units and a transmission unit transmitting the signal frame including the first pilot signals and the second pilot signals via radio frequency (RF) channels such that a time difference occurs.

The inserter inserts the first pilot signals and the second pilot signals into the frames such that the time difference occurs.

### Advantageous Effects

According to an apparatus for transmitting/receiving a signal and a method of transmitting/receiving a signal of the present invention, it is possible to readily detect and restore a transmitted signal. In addition, it is possible to improve the signal transmitting/receiving performance of the transmitting/receiving system.

### Brief Description of the Drawings

FIG. 1 is a view showing a signal frame for transmitting a service.
FIG. 2 is a view showing the structure of a first pilot signal (PI) in the signal frame.
FIG. 3 is a view showing a signaling window.
FIG. 4 is a view showing a signal transmitting apparatus for transmitting a TFS signal frame according to an embodiment of the present invention.
FIG. 5 is a view showing a signal receiving apparatus capable of receiving a time-frequency slicing (TFS) signal frame according to an embodiment of the present invention.
FIG. 6 is a view showing another embodiment of the structure of the first pilot symbol.
FIG. 7 is a view showing FFT modes, which are applicable to the signal transmitting/ receiving apparatus according to the present invention, and guard intervals according to the FFT modes.
FIG. 8 is a view showing an apparatus for receiving a signal according to another embodiment of the present invention.
FIG. 9 is a view showing an apparatus for receiving a signal according to another embodiment of the present invention.
FIG. 10 is a view showing an apparatus for receiving a signal according to another embodiment of the present invention.
FIG. 11 is a view showing an apparatus for receiving a signal according to another embodiment of the present invention.
FIG. 12 is a view showing an apparatus for receiving a signal according to another embodiment of the present invention.
FIG. 13 is a view showing an apparatus for receiving a signal according to another embodiment of the present invention.
FIG. 14 is a view showing an apparatus for receiving a signal according to another embodiment of the present invention.
FIG. 15 is a view showing another embodiment of the structure of the signal frame according to the present invention.
FIG. 16 is a view showing another example of the signaling window.
FIG. 17 is a flowchart illustrating a method of receiving a signal according to an embodiment of the present invention.

### Best Mode for Carrying Out the Invention

Hereinafter, a service indicates broadcasting contents which can be transmitted using a communication apparatus or the provision of the contents.

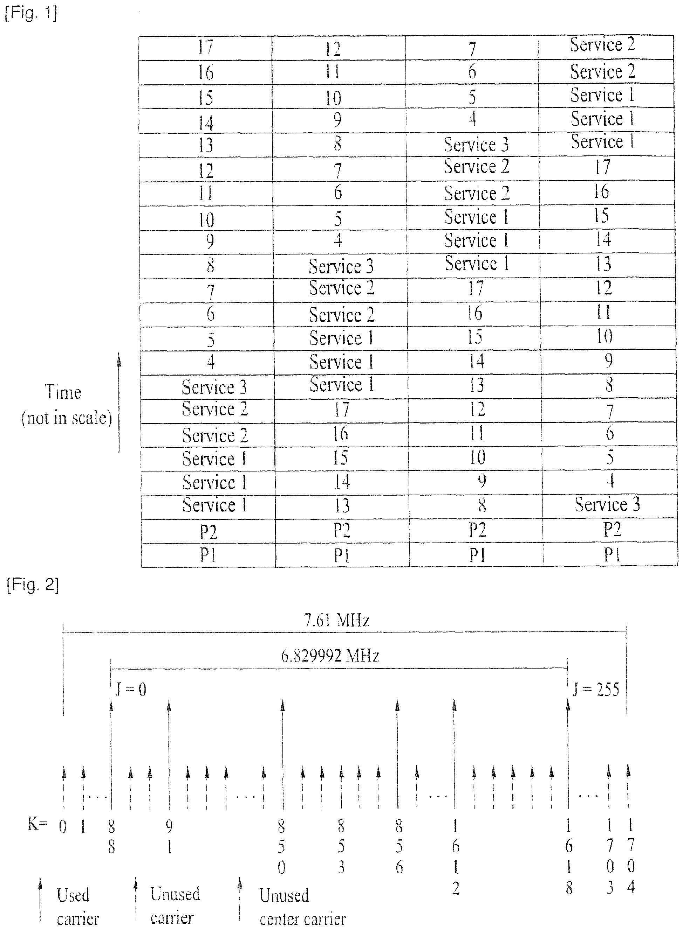

FIG. 1 is a view showing a signal frame for transmitting a service.

The signal frame shown in this Figure is an example of a signal frame for transmitting a broadcasting service. One service is multiplexed and transmitted in time and frequency domains. Such a signal frame transmitting method is called a time-frequency slicing (TFS) method. Previously one service was transmitted in a radio frequency (RF) band, but herein one service is transmitted in a state of being divided into a plurality of RF bands, such that a signal transmitting apparatus can obtain a statistical multiplexing gain for efficiently transmitting more services. Since the signal transmitting/receiving apparatus can transmit/receive one service via a plurality of RF channels, it is possible to obtain a frequency diversity gain.

In this example, services 1, 2 and 3 are transmitted in RF 1, RF 2, RF 3 and RF 4 bands. The number of RF bands and the number of services are exemplary. Two reference signals (a first pilot signal P1 and a second pilot signal P2) denoted by P1 and P2 are arranged at the start positions of the signal frame. For example, in the RF 1 band, the first pilot signal P1 and the second pilot signal P2 are received, and three slots related to the service 1, two slots related to the service 2 and one slot related to the service 3 are sequentially arranged with time. Slots 4 to 17 related to other services may be arranged next to the slot related to the service 3.

In the RF 2 band, the first pilot signal P1, the second pilot signal P2, and the slots denoted by 13 to 17 are sequentially arranged. In addition, three slots related to the service 1, two slots related to the service 2 and one slot related to the service 1 are sequentially arranged.

Similarly, in the RF 3 and RF 4 bands, the service 1, the service 2 and the service 3 are multiplexed and transmitted by the TFS method, and an orthogonal frequency division multiplexing (OFDM) method is used as a modulation method used for the transmission of the signal.

In the signal frame, the services are shifted in the RF band and the time axis.

FIG. 2 is a view showing the structure of the first pilot signal (PI) in the signal frame.

The first pilot signal and the second pilot signal are arranged at the start position of the signal frame. The first pilot signal P1 may be modulated by a 2K FFT mode and transmitted in a state of including a 1/4 guard interval. In this Figure, the first pilot signal is designed to occupy a 6.82992 MHz band in a 7.61 MHz band. In the first pilot signal, only 256 carriers of 1705 active carriers are used and one active carrier is averagely used for every six carriers. The data carriers are irregularly arranged with gaps 3, 6, 9 and so on. In this Figure, a solid line denotes the position of a used carrier, a thin dotted line denotes the position of an unused carrier, and a dashed dotted line denotes the position of the unused center carrier. In the first pilot signal, the used carrier may be mapped to a symbol by a binary phase-shift keying (BPSK) technique or a pseudo random binary sequence (PRBS). The size of Fast Fourier Transform (FFT) used in the second pilot signal may be represented by a plurality of PRBSs.

The signal receiving apparatus can detect the structure of the pilot signal so as to recognize the TFS signal frame, obtain the FFT size of the second pilot signal, compensate for a coarse frequency offset of a received signal, and acquire time synchronization.

The second pilot signal P2 may be transmitted with the same FFT size and guard interval as a data symbol. In the second pilot signal, one carrier is used for every three carriers as a pilot carrier. The signal receiving apparatus can compensate for a fine frequency synchronization offset using the second pilot signal and perform fine time synchronization. The second pilot signal can transmit information on a layer 1 (L1) of open systems interconnection (OSI) layers. For example, the second pilot signal may include information on a physical parameter and a frame configuration.

The information on the layer 1 included in the second pilot signal is as follows.

The information on the layer 1 includes a length indicator which is the length of data including the information on the layer 1 in order to adequately use the signaling ch annels of the layers 1 and 2. A frequency indicator which is the frequency information of the RF channel, the length of the guard interval, a maximum number of forward error correction (FEC) blocks per frame in physical channels and an actual number of FEC blocks to be included in the FEC block buffer for currnet and previous frames in the physical channels are further included.

The information on the layer 1 may further include the number of frames for the service, the start address and the length of the slot having accuracy of the OFDM carrier unit included in an OFDM symbol, the slot according to the OFDM carrier, the number of bits padded in a last OFDM carrier, service modulation information, service code rate information and multi-input multi-output scheme information.

The information on the layer 1 may further include cell IDs of broadcasting regions transmitted by a broadcasting transmitter, flags for notification messages such as an emergency message and service information, the number of current frames, and additional bits for future use.

The second pilot signal is used for channel estimation for decoding the symbols included in the second pilot. The second pilot signal may be used as an initial value of the channel estimation for next data symbols. The second pilot signal can transmit information on the layer 2 (L2). For example, the second pilot signal may describe information related to the transmitted service. The signal receiving apparatus can decode the second pilot signal so as to obtain the information on the service included in the TFS frame. Accordingly, it is possible to efficiently scan the channel.

For example, the second pilot signal may include two OFDM symbols of an 8k FFT mode. Generally, the second pilot signal may be any one of one OFDM symbol of a 32k FFT mode, one OFDM symbol of a 16k FFT mode, two OFDM symbols of the 8k FFT mode, four OFDM symbols of a 4k FFT mode, and eight OFDM symbols of the 2k FFT mode.

That is, since one OFDM symbol having a large FFT size or a plurality of OFDM symbols having a small FFT size may be included in the second pilot signal, the capacity of the bits which can be transmitted by the pilot can be maintained.

If the information to be transmitted via the second pilot signal exceeds the capacity of the OFDM symbol of the second pilot signal, the OFDM symbols after the second pilot signal may be further used. The information on the layer 1 (L1) and the information on the layer 2 (L2) included in the second pilot signal are error-correction-encoded, interleaved and distributed in the second pilot signal, the information can be restored even when impulse noise occurs.

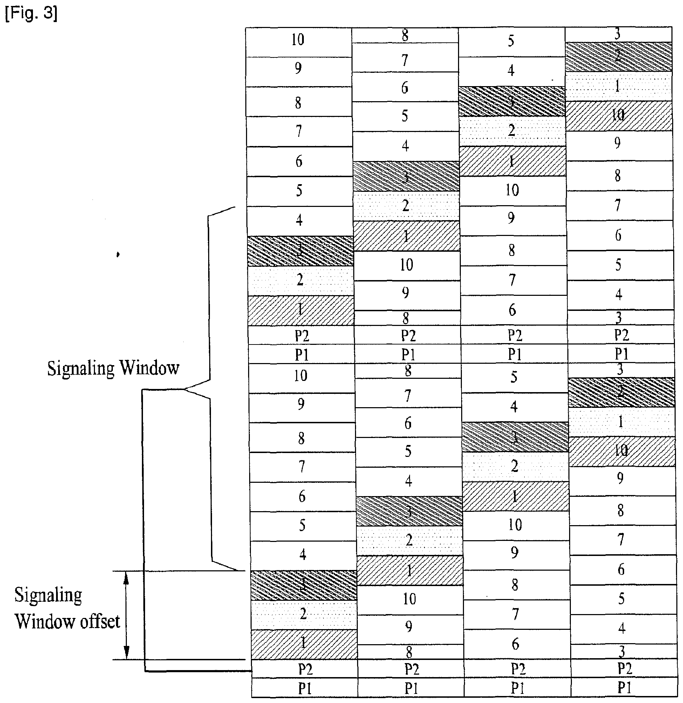

FIG. 3 is a view showing a signaling window. In this Figure, a TFS frame shows the offset concept of signaling information. The information on the layer 1 included in the second pilot signal includes frame configuration information necessary for decoding a data symbol by the signal receiving apparatus and physical layer information. Accordingly, when the information on the data symbol which follows the second pilot signal is transmitted in a state of being included in the second pilot signal, the signal receiving apparatus cannot immediately decode the following data symbol due to a time consumed for decoding the second pilot signal.

Accordingly, as shown in this Figure, the information on the layer 1 included in the second pilot signal includes information on the size of one TFS frame, and includes information included in a signaling window from a position separated from the second pilot signal by a signaling window offset.

Meanwhile, for channel estimation of the data symbol configuring a service, a scattered pilot and a continual pilot may be included in the data symbol.

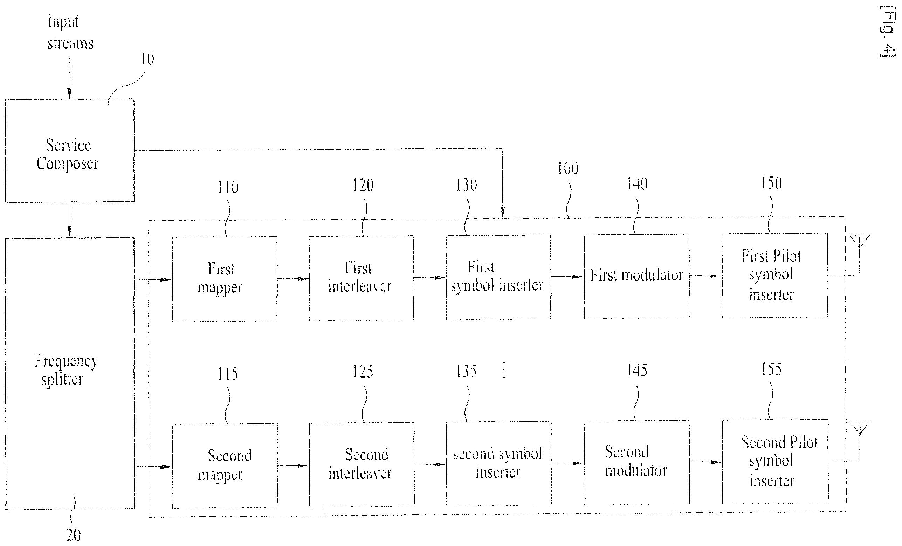

FIG. 4 is a view showing a signal transmitting apparatus for transmitting the TFS frame, according to an embodiment of the present invention. The embodiment of the signal transmitting apparatus may include a service composer 10, a frequency splitter 20, and a transmission unit 100. The transmission unit 100 may encode and modulate a signal to be included in RF bands.

The service composer 10 receives an input stream which is service data, multiplexes a plurality of services to be included in RF channels, and outputs the multiplexed signal.

The frequency splitter 20 may receive service data to be transmitted in the RF bands, split the service data so as to be allocated to the RF frequency bands, and output the split service data.

The transmission unit 100 processes the data to be transmitted in the frequency bands and transmits the processed data. For example, with respect to the service data to be transmitted via a first RF channel, a first mapper 110 maps the received service data to symbols. A first interleaver 120 interleaves the symbols in order to prevent a burst error from being generated in the signal.

A first symbol inserter 130 may output a pilot signal which can be positioned in a frame of the signal, for example, a signal frame including a dispersed pilot signal or a continual pilot signal.

A first modulator 140 modulates the interleaved data according to a signal modulation method and, for example, may modulate the signal using an OFDM method.

A first pilot symbol inserter 150 may insert a first pilot signal and a second pilot signal into the signal frame and transmit a TFS signal frame.

Service data transmitted via a second RF channel may be also processed by blocks 115, 125, 135, 145 and 155 arranged in another path of the transmission unit and a TFS signal frame may be transmitted.

The number of signal processing paths of the transmitting unit 100 may be equal to the number of RF channels included in the TFS signal frame.

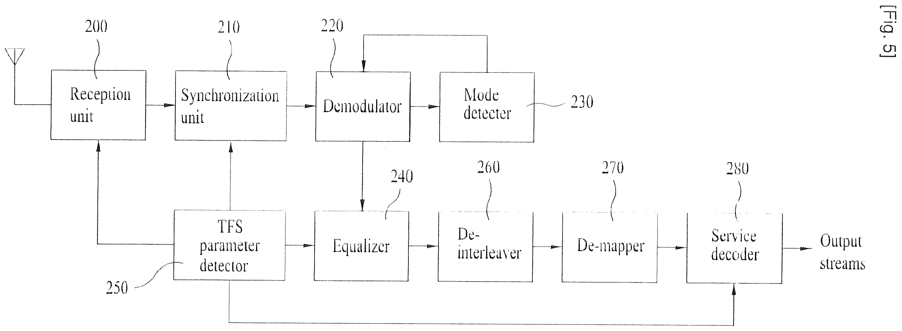

FIG. 5 is a view showing a signal receiving apparatus capable of receiving a TFS signal frame, according to an embodiment of the present invention. The embodiment of the signal receiving apparatus may include a reception unit 200, a synchronization unit 210, a demodulator 220, a mode detector 230, an equalizer 260, a parameter detector 250, a deinterleaver 260, a demapper 270 and a service decoder 280.

The reception unit 200 may receive the signal of the first RF channel selected by a user in the TFS signal frame. If the TFS signal frame includes a plurality of RF channels, the reception unit 200 may receive the signal while changing the plurality of RF channels.

The synchronization unit 210 may acquire and output the synchronization of the received signal, and the demodulator 220 may demodulate the synchronized signal. The mode detector 230 may acquire an FFT mode of the second pilot signal using the first pilot signal of the TFS signal frame.

Then, the demodulator 220 demodulates the received signal with the FFT size of the second pilot signal, and the equalizer 240 compensates for the channel of the received signal and outputs the compensated signal. The deinterleaver 260 deinterleaves the received signal of which the channel is equalized, and the demapper 270 demaps the deinterleaved symbol according to a symbol demapping method corresponding to a symbol mapping method of the transmitted signal, such as a QAM.

The parameter detector 250 acquires physical parameter information such as the information on the layer 1 included in the second pilot signal from the signal output from the equalizer 240 and provides the acquired physical parameter information to the reception unit 200 and the synchronization unit 210. The reception unit 200 may change the RF channel using the information detected by the parameter detector 250.

The parameter detector 250 may output the information related to the service, and the service decoder 280 may decode the service data of the received signal according to the information related to the service and output the decoded data.

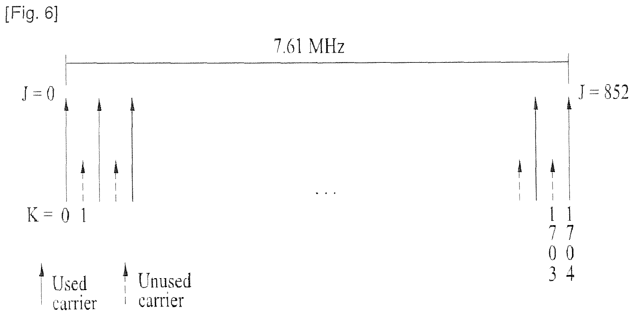

FIG. 6 is a view showing another embodiment of the structure of the first pilot symbol. In this Figure, the first pilot symbol may use. for example, a guard interval which varies according to the FFT modes. The example of FIG. 6 shows an OFDM symbol of a 2K FFT mode. In this symbol, used carriers may be arranged in even carriers and null carriers or unused carriers may be arranged in odd carriers. In contrast, the null carriers or unused carriers may be arranged in even carriers and pilot symbol carriers may be arranged in the odd carriers. The information included in the carriers of the first pilot signal may be mapped to the symbols by the BPSK or modulated by the PRBS.

In the example of this drawing, a larger number of pilot carriers are included compared with the example of FIG. 2 and the pilot carriers are regularly arranged. The larger number of pilot carriers can improve signal detection and offset estimation performance in a frequency-selective fading environment. The signal receiving apparatus may compare the energies of the odd carriers and the even carriers of the first pilot signal and identify the first pilot signal.

In the case where the signal receiving apparatus estimates the coarse frequency offset using the first pilot signal, since the pilot carriers of the first pilot signal are modulated by the PRBS, a correlation between the received signal and the PRBS generated by the signal receiving apparatus is performed and the first pilot signal is decided if the correlation value is a peak value.

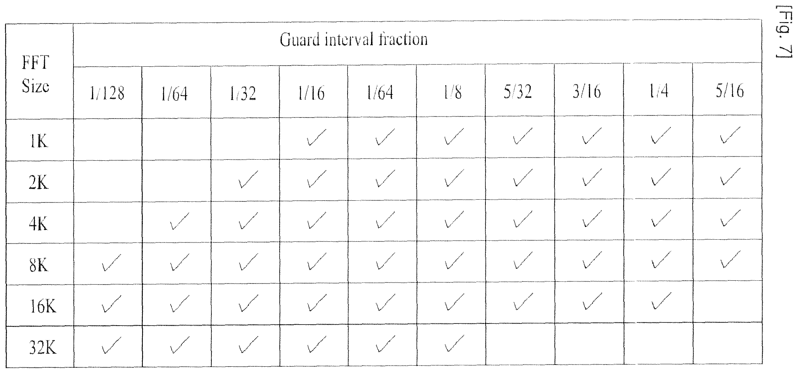

FIG. 7 is a view showing FFT modes, which are applicable to the signal transmitting/ receiving apparatus according to the present invention, and guard intervals according to the FFT modes. For example, the signal transmitting/receiving apparatus may transmit/receive the pilot signal according to the FFT mode and the guard interval shown in this Figure. A portion having a mark v indicates the length of the available guard interval in each of the FFT modes. For example, the pilot signal modulated by the 32k FFT mode may have the guard interval of 1/128, 1/64, 1/32, 5/64 or 1/8.

The signal transmitting/receiving apparatus can extract the second pilot signal from the first pilot signal and obtain channel information applicable to the second pilot signal, according to the structure of the pilot signal shown in this Figure. For example, the signal transmitting/receiving apparatus can transmit the pilot signal by a largest available FFT mode and a longest guard interval mode.

When the first pilot signal is detected, the signal transmitting/receiving apparatus can obtain the channel information which can decode the second pilot signal received next to the first pilot signal. For example, when the first pilot signal using the 32K FFT mode and the guard interval of 1/8 is transmitted, the number of carriers in the first pilot signal is increased. Accordingly, although the delay spread occurs long, the channel information for obtaining the second pilot signal can be more accurately obtained. When the pilot carriers are arranged at a regular gap as described above, the channel information can be readily obtained.

The signal transmitting/receiving apparatus can apply the first pilot signal and the channel information obtained by the structure thereof to the second pilot signal. Accordingly, if the second pilot signal is stored in order to separately obtain the channel information of the second pilot signal and the channel information of the stored second pilot signal is used, a storage device or a processing process is increased, latency is generated, and a synchronization detection time can be increased.

However, when the large FFT mode and the long guard interval structure are regularly used in the first pilot signal, the channel information of the second pilot information of the TFS signal frame may be first obtained. Accordingly, the storage device or the synchronization detection time can be decreased.

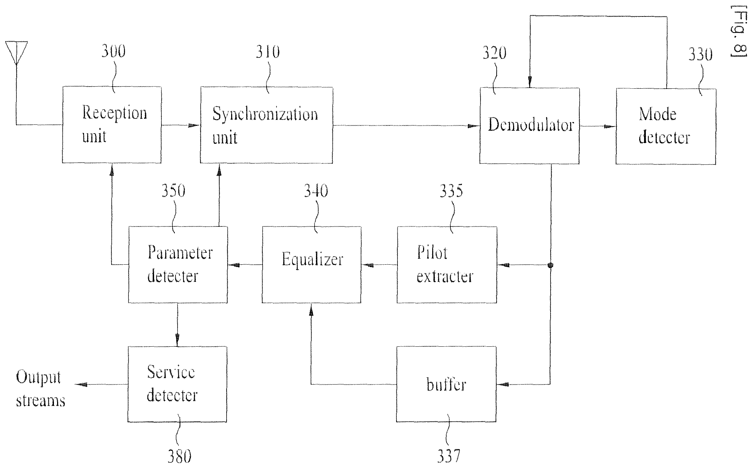

FIG. 8 is a view showing an apparatus for receiving a signal according to another embodiment of the present invention. The blocks shown in this Figure have the same functions as the blocks described in the above-described embodiment of the signal receiving apparatus. That is, the operations of a reception unit 300, a synchronization unit 310, a parameter detector 350 and a service decoder 380 are equal to those of the above-described embodiment. If the channel information is obtained from the second pilot information, a mode detector 330 detects the mode according to the FFT size of the second pilot signal from the first pilot signal. A pilot extractor 336 extracts the channel information included in the second pilot signal from the pilot symbol included in the second pilot signal.

A buffer 337 temporarily stores and delays the second pilot signal. An equalizer 340 equalizes the channel of the second pilot signal output after being stored in the buffer 337 using the channel information of the second pilot information output from the pilot extractor 335.

The parameter detector 350 may detect a physical parameter included in the second pilot signal, and the service decoder 380 may decode a service selected by the user according to the information related to the service included in the second pilot signal.

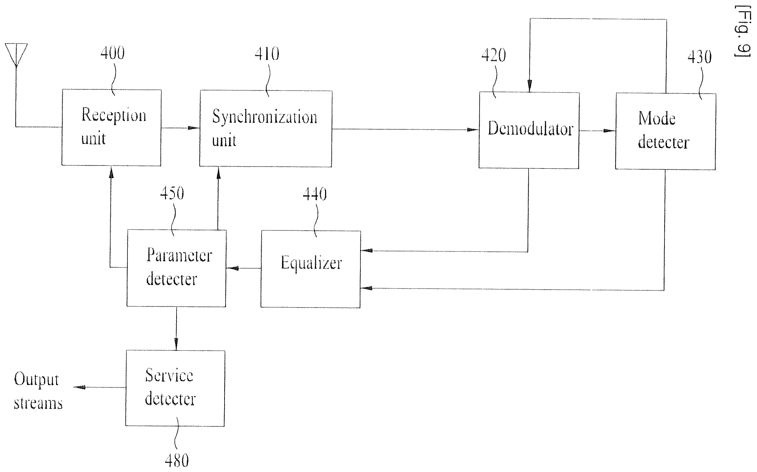

FIG. 9 is a view showing an apparatus for receiving a signal according to another embodiment of the present invention, in the case where the first pilot signal includes the channel information of the second pilot signal. The operations of a reception unit 400, a synchronization unit 410, a parameter detector 450 and a service decoder 480 are equal to those of the above-described embodiment.

In the case where a mode detector 430 detects the first pilot signal unlike the above-described embodiment, the channel information necessary for the channel equalization of the second pilot signal may be also output. A demodulator 420 may receive the FFT mode information of the second pilot signal from the first pilot signal and demodulate the second pilot signal.

An equalizer 440 may compensate for channel distortion of the second pilot signal demodulated by the demodulator 420 using the channel information output from the mode detector 430.

As described above, there are various combinations of the available FFT mode and the guard interval of the TFS signal frame. The structure of the first pilot signal (the structure of the first pilot signal using any one of the odd carriers and the even carriers) is used and the second pilot signal may be transmitted using the mode having a large FFT size and a long guard interval.

The PRBS used in the first pilot signal indicates the FFT size of the data symbol and the second pilot signal. Different PRBSs indicate FFT modes having different sizes. Thus, the signal receiving apparatus can distinguish between the PRBSs by the PRBS correlation. However, since this method requires a calculation for all PRBS patterns and requires a similar calculation even when the length of the guard interval of the second pilot signal is detected, the performance of the signal receiving apparatus may deteriorate. That is, the configuration of the signal receiving apparatus becomes complicated and the synchronization acquisition can be delayed.

However, if the FFT mode and guard interval having a fixed length are used in the second pilot signal and the FFT mode and guard interval having a length as long as possible are used, the channel information of the second pilot signal can be obtained using the first pilot signal and the second pilot signal and the data symbol can be readily decoded. In the case where the channel information is obtained from the second pilot signal, the channel information may be applied to the channel equalization of the next data symbol. For example, the FFT modes and the guard interval lengths of the first and second pilot signals may be set to the 32K and the guard interval of 1/8, respectively.

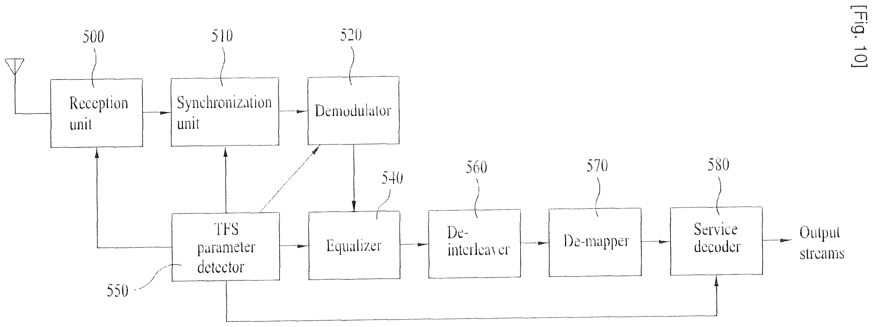

FIG. 10 is a view showing an apparatus for receiving a signal, which is capable of decoding the TFS signal frame using the first and second pilot signals as described above.

A reception unit 500 receives a TFS signal frame including a first pilot signal using one of the odd carriers and the even carriers and a second pilot signal having a FFT mode having a large FFT size and a long guard interval. A synchronization unit 510 acquires the synchronization of the received signal.

A demodulator 520 demodulates the predetermined first pilot signal and demodulates the second pilot signal having predetermined FFT mode and guard interval. Since the demodulator 520 knows the FFT mode and the guard interval of the second pilot signal, the PRBS correlation may not be performed with respect to the first pilot signal.

An equalizer 540 demodulates the signal including the first pilot signal and the second pilot signal. The second pilot signal may include the FFT mode and the guard interval information of the data symbol which follows the second pilot signal.

A parameter detector 550 transmits the FFT mode and the guard interval information of the data symbol detected from the second pilot signal to the demodulator 520, and the demodulator 520 may demodulate the data symbol by the received FFT mode and the guard interval information. The parameter detector 550 transmits the information indicating that the TFS signal frame is detected and information necessary for the signal synchronization from the first and second pilot signals of the TFS signal frame to the reception unit 500 and the synchronization unit 510.

The equalizer 540 may equalize the channel with respect to the data symbol and output the signal, of which the channel is compensated for, to a deinterleaver 560.

The operations of the deinterleaver 560, a demapper 570 and a service decoder 580 are equal to those of the above-described embodiment.

The FFT size of the second pilot signal can be transmitted by the PRBS pattern of the first pilot signal, and the guard interval information of the second pilot signal may be set in the information transmitted by the pilot carrier included in the first pilot signal and may be transmitted. In this case, the calculation and the time for obtaining the guard interval information of the second pilot signal can be reduced.

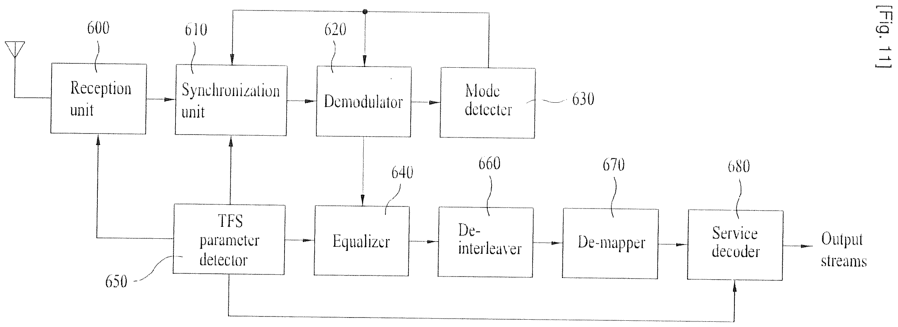

FIG. 11 is a view showing an apparatus for receiving a signal, which is capable of obtaining the guard interval information of the second pilot signal. After the synchronization of the received signal is acquired, a demodulator 620 demodulates the first pilot signal and a mode detector 630 detects the FFT size information of the second pilot signal from the pattern of the first pilot signal. The mode detector 630 obtains the guard interval information of the second pilot signal from the information included in the pilot carriers of the first pilot signal. A synchronization unit 610 acquires the synchronization of the second pilot signal using the guard interval information of the second pilot signal, and the demodulator 620 demodulates the second pilot signal. The operations of the remaining blocks are equal to the corresponding blocks of the above-described embodiment.

As another embodiment, the second pilot signal may become several OFDM symbols or one OFDM symbol having the 16K FFT mode or the 32K FFT mode. The second pilot signal is error-correction-encoded and interleaved and thus is robust against an error, compared with another signal. The signal receiving apparatus can use the number of OFDM symbols of the second pilot signal in order to deinterleave the second pilot signal. Accordingly, the number of OFDM symbols included in the second pilot signal may be signaled to a first OFDM symbol of the first pilot signal or the second pilot signal.

In order to obtain service data included in the data symbol, the signal receiving apparatus decodes the service data at the position of a desired service in the data symbol. The embodiment in which the signal receiving apparatus efficiently obtains the desired service data will be described.

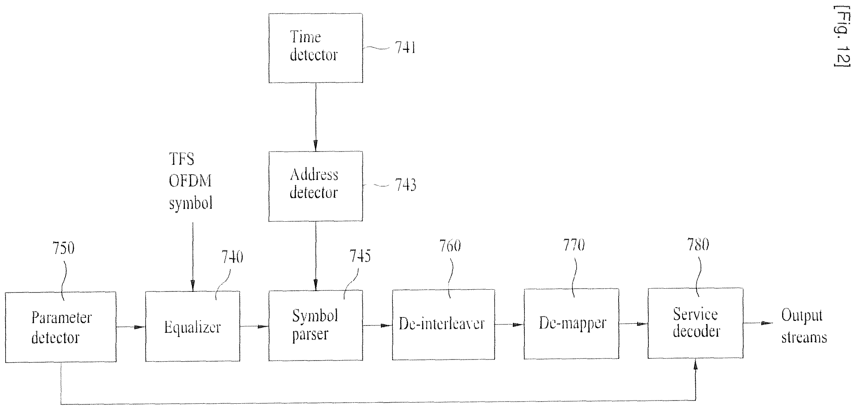

First, FIG. 12 is a view showing another embodiment of an apparatus for receiving a signal, which is capable of obtaining service data. If the data symbol of the TFS signal frame is demodulated, the equalizer 740 equalizes the channel of the received data symbol.

A time detector 741 may detect a time when a RF channel is changed by the signal receiving apparatus and a time consumed for changing the RF channel. An address detector 743 may detect the address of a slot transmitted after the detected times in a selected RF channel of the TFS signal frame on the basis of the detected times.

A symbol parser 745 may parse the data symbol included in the slot o utput from an equalizer 740 by referring to the detected address. A deinterleaver 760 deinterleaves the parsed symbol data and a demapper 770 converts the symbol data into bit data. A service decoder 780 may decode the converted bit data by referring to the service position detected by a parameter detector 750.

In the TFS signal frame, the service data occupies the slots allocated by a service multiplexer. Accordingly, information on the position and the size of the service data may be included in the second pilot signal received before the data symbol and may be transmitted. The positional information of the service data may be information of the OFDM symbol unit included in the data symbol.

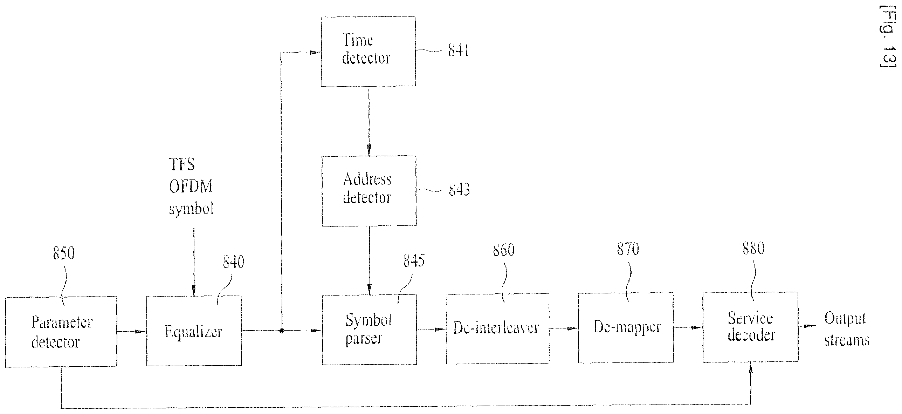

FIG. 13 is a view showing another embodiment of an apparatus for receiving a signal, which is capable of efficiently obtaining service data. In FIG. 13, the second pilot signal may use the number (or the index) of OFDM symbols in order to detect the position of the OFDM symbol including the positional information of the service data. The OFDM symbols included in the data symbol may include the index.

In the case where the RF channel is changed and the service is received, the time when the RF channel is changed may vary, and the number of OFDM symbols passing while the RF channel is changed may vary. Accordingly, as described above, the position of the data symbol including the service can be calculated in the OFDM symbol units, rather than the search for the service on the basis of the RF channel change time.

A symbol index detector 841 detects the index of the OFDM symbol from the data symbol output from the equalizer 840. The index of the OFDM symbol may be decided to the value of a specific carrier included in the OFDM symbol. An address detector 843 receives the index of the OFDM symbol and detects the address of the slot. A frame parser 845 may parse the data output from the equalizer 840 by referring to the detected address of the slot.

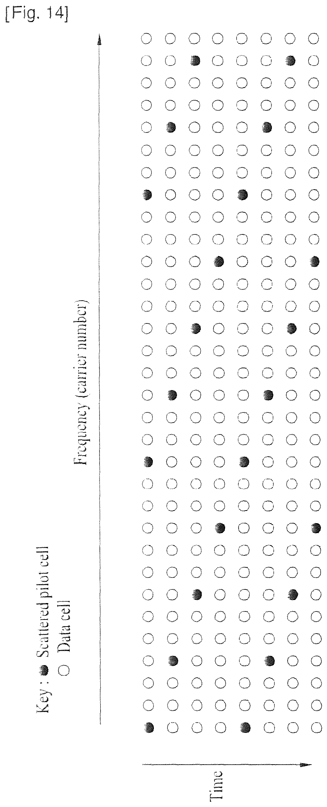

The OFDM symbol included in the data symbol includes a scattered pilot and a continual pilot in order to obtain the channel information. FIG. 14 is a view showing the pattern of a scattered pilot, which may temporally have a periodical pattern. The example of FIG. 14 shows the pattern of the scattered pilot shifted by four carriers in a frequency direction with the elapse of time. If the position of the scattered pilot is detected, the channel information can be obtained from the OFDM symbol. If the index of the OFDM symbol is detected, the pattern of the scattered pilot according to the index can be detected and the latency necessary for extracting the position of the service and extracting the position of the scattered pilot can be decreased. For example, if the demodulator (or the symbol index detector) of the signal receiving apparatus obtains the index of the OFDM symbol, the pattern of the scattered pilot in the OFDM symbol to be parsed can be obtained without another calculation. The service decoder may detect the position of the data symbol including the service data to be decoded using the index of the OFDM symbol output from the demodulator (or the symbol index detector).

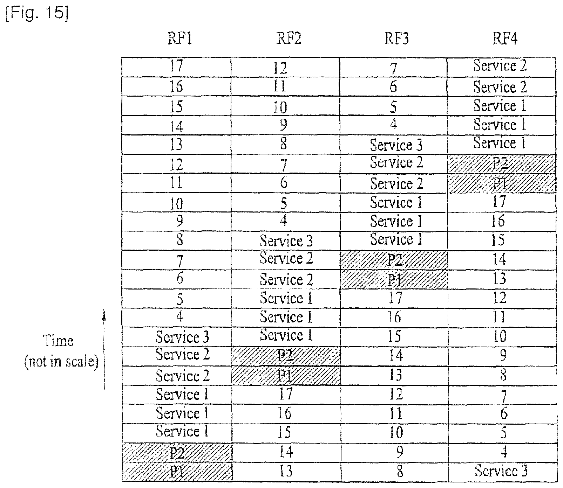

FIG. 15 is a view showing another embodiment of the structure of the signal frame according to the present invention. In the TFS frame shown in this Figure, first pilot signals and second pilot signals of the RF channels are shifted on a time axis unlike the above-described TFS frame.

In a RF1 channel of this embodiment, the first pilot signal and the second pilot signal are located on the start portion of the TFS frame. In a RF2 channel, the first pilot signal and the second pilot signal are separated from the start slots of the TFS frame of the RF1 channel by a plurality of slots. In a RF3 channel, the first pilot signal and the second pilot signal are separated from the first pilot signal and the second pilot signal of the RF2 channel by several slots. Similarly, in a RF4 channel, the first pilot signal and the second pilot signal are shifted from the first pilot signal and the second pilot signal of the adjacent RF3 channel.

In addition to the first pilot signals and the second pilot signals, slots for transmitting the service are shifted according to the RF channels on the basis of the above-described relationship.

The first pilot signal and the second pilot signal shifted temporally may include information on a layer 1 (L1) and information on a layer 2 (L2). As described in the above-described embodiment, even in the TFS frame shown in this Figure, the first pilot signals may include FFT mode information and guard interval information of the second pilot signals. If the first pilot signals are used, the channel information of the second pilot signals can be acquired. The channel information of a following data symbol can be acquired from the second pilot signals. An OFDM symbol included in the TFS frame may include a symbol index.

If the structure of the TFS frame is used, the signal receiving apparatus can reduce an error of the received signal using the first pilot signals and the second pilot signals. For example, if the first pilot signals and the second pilot signals are located on the start potions of all the RF channels, the first RF channel may be selected, the first pilot signal and the second pilot signal of the first RF channel may be acquired, and the first RF channel may be changed to the second RF channel. In this case, the first pilot signal and the second pilot signal of the second RF channel may be received after the same period as the period of the first pilot signal and the second pilot signal of the first RF channel are elapsed. Accordingly, although the signal receiving apparatus acquires the first pilot signal and the second pilot signal from any RF channel of the TFS frame, the period for receiving the pilot signals is equal to the period of the TFS frame.

However, as shown, if the first pilot signals and the second pilot signals are shifted according to the RF channels and the signal receiving apparatus changes the RF channel or simultaneously receives at least two RF channels, the first and second pilot signals can be acquired in a short period. The signal receiving apparatus can accurately acquire the channel information using the pilot signals.

If the TFS frames are transmitted via four RF channels in this manner, the period for acquiring the first and second pilot signals is reduced to 1/4 of the above-described period. Accordingly, the receptionunit can more accurately perform the channel estimation. Since the period which can acquire the first pilot signal and the second pilot signal can be inversely proportional to the number of RF channels, the signal receiving apparatus can more accurately perform channel compensation. The signal receiving apparatus may extract a transmission parameter from the first pilot signal and the second pilot signal transmitted via any RF channel, change the channel to another RF channel, and acquire a service and information included in a data symbol using the transmission parameter of the previous RF channel and the transmission parameter of the changed RF channel.

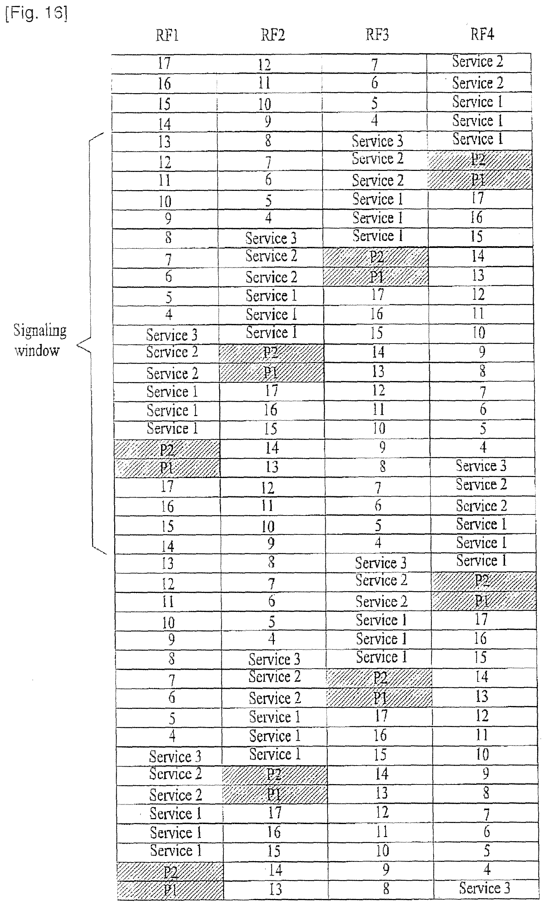

FIG. 16 is a view showing another example of the signaling window. A preamble including the first pilot signal and the second pilot signal is shifted according to the RF channels and the data symbol including the service is shifted. In the RF 1 channel, the second pilot signal may include information on the signaling window shown in this Figure.

Similar to the RF2 channel, since the slots having the same contents as the RF1 channel are arranged but are temporally shifted, the position of the signaling window is shifted. The parameters of the first pilot signal and the second pilot signal of each RF channel include the information on the data symbol included in the signaling window of the RF channel and are used for decoding the data symbol.

As described in the above-described embodiment, the signal receiving apparatus may acquire the channel information of the second pilot signal from the first pilot signal and acquire the channel information of the signal, which follows the second pilot signal, from the second pilot signal, even when the signal frame shown in this Figure is received. Accordingly, the reliability of the information transmitted by the first pilot signal and the second pilot signal can be improved and channel estimation performance can be improved.

If the TFS frame shown in FIG. 15 is desired to be transmitted, in the embodiment of FIG. 4, the service composer 10 may process the signals processed along the signal transmission paths in the transmission unit 100 such that a time difference occurs. For example, the signal transmitted via the first path (from the reference numeral 110to the reference numeral 160) and the signal transmitted via the second path (from the reference 115 to the reference numeral 165) may be transmitted with a time difference although the signals include the same preamble and service data.

Alternatively, the frequency splitter 20 may control the signals to be transmitted according to the RF channels such that a time difference occursbetween the RF channels. For example, the frequency splitter 20 splits the signal output from the service composer 10 according to the frequencies and outputs the split signals to the symbol mappers 110 and 115 with a time difference.

Alternatively, the transmission unit 100 may arrange the first pilot signals and the second pilot signals between the signal frames with a time difference if the signal frames transmitted via a plurality of RF channels are built.

If the TFS frame shown in FIG. 15 is desired to be received, the operation which is changed or further performed in the embodiment of FIG. 5 is as follows.

The reception unit 200 may receive the signals according to the RF channels. The reception unit 200 may includes a plurality of tuners. The plurality of tuners may select and output the RF channels with the time difference in the TFS frame. Alternatively, the reception unit 200 may receive the signal included in the RF channel while one RF channel is changed to another RF channel.

The synchronization unit 210 may acquire the synchronization of the first pilot signals and the second pilot signals which are temporally shifted between the RF channels.

The demodulator 220 may demodulate the signals which are temporally shifted between the RF channels and demodulate the first pilot signals and the second pilot signals.

The equalizer 240 may perform the channel compensation with respect to the first pilot signals and the second pilot signals demodulated by the demodulator 220 according to the RF channels. The equalizer 240 may acquire the channel information using the first pilot signals and the second pilot signals between the RF channels. The channel of the service data included in the RF channel is compensated for using the acquired channel information.

The parameter detector 250 may detect the transmission parameters included in the first pilot signals and the second pilot signals according to the RF channels, for example, the information on the layer 1 and the information on the layer 2. The following description is equal to that of FIG. 5.

In the embodiment of the receiving apparatus for receiving the structure of the TFS frame shifted between the RF channels, the description of the reception unit 300 to the parameter detector 350 of FIG. 8, the reception unit 400 to the parameter detector 450 of FIG. 9, the reception unit 500 to the parameter detector 550 of FIG. 10, the reception unit 600 to the parameter detector 650 of FIG. 11, the reception unit 700 to the parameter detector 750 of FIG. 12, and the reception unit 800 to the parameter detector 850 of FIG. 13 are equal to the description of FIG. 5.

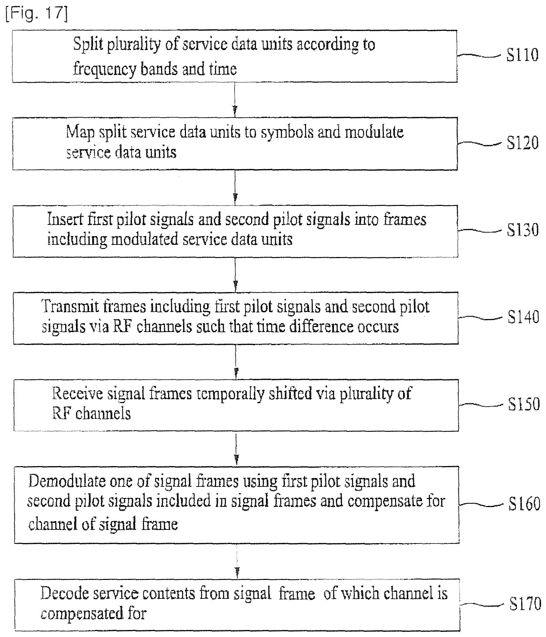

FIG. 17 is a flowchart illustrating a method of transmitting/receiving a signal according to an embodiment of the present invention.

A plurality of service data units are split according to frequency bands and time (S110).

The split service data units are mapped to symbols and are modulated (S120).

The first pilot signals and the second pilot signals are inserted into the frames including the modulated service data units (S130). The first pilot signals and the second pilot signalsmay be inserted into the frames in a relationship shifted according to the signal frame such that a time difference occurs between the frames.

The frames including the first pilot signal and the second pilot signal are transmitted such that a time difference occurs between the RF channels (S140). Alternatively, the signal frames having a time difference between the signal frames are transmitted via the RF channels.

In this transmission, the first pilot signals and the second pilot signalsmay be shifted according to the RF channels such that a difference occurs in a transmission time or a time difference may occur in signal processing.

If the signals are received, the signal frames shifted temporally are received via a plurality of RF channels (S150).

One of the signal frames is demodulated using the first pilot signal and the second pilot signal included in the signal frames and the channel of the demodulated signal frame is compensated for (S160).

The service data of the service contents is decoded from the signal frame of which the channel is compensated for (S170).

### Mode for the Invention

The embodiments of the invention are described in the best mode of the invention.

### Industrial Applicability

A method of transmitting/receiving a signal and an apparatus for transmitting/ receiving a signal of the present invention can be used in broadcast and communication fields.

Further embodiments of the invention are described in the following numbered paragraphs:
[1] A method of transmitting a signal, the method comprising: outputting a plurality of service data units according to frequency bands; mapping the output service data units to symbols and modulating the service data units; inserting first pilot signals and second pilot signals into frames including the modulated service data units; and transmitting the frames including the first pilot signals and the second pilot signals such that a time difference occurs between radio frequency (RF) channels.
[2] The method according to paragraph 1, wherein the first pilot signals and the second pilot signals are inserted such that the time difference occurs in the frames.
[3] A method of receiving a signal, the method comprising: receiving signal frames temporally shifted via a plurality of radio frequency (RF) channels; demodulating one of the signal frames using first pilot signals and second pilot signals included in the signal frames and compensating for the channel of the demodulated signal frame; and decoding service contents from the signal frame of which the channel is compensated for.
[4] The method according to paragraph 3, wherein the compensating of the channel includes acquiring the channel information of the signal frames using the first pilot signal and the second pilot signal included in the signal frames and compensating for the signals included in the received signal frames using the channel information.
[5] The method according to paragraph 3, wherein each of the first pilot signals includes information for identifying guard intervals of the second pilot signals among the signals which follow the first pilot signals.
[6] An apparatus for receiving a signal, the apparatus comprising: a reception unit receiving signal frames temporally shifted via a plurality of radio frequency (RF) channels; a synchronization unit acquiring first pilot signals and second pilot sig- nalsincluded in the signal frames; a demodulator demodulating one of the signal frames using the first pilot signals and the second pilot signals an equalizer compensating for the channel of the demodulated signal frame; and a service decoder decoding service contents from the signal frame of which the channel is compensated for.
[7] The apparatus according to paragraph 6, wherein the equalizer acquires the channel information of the signal frames using the first pilot signals and the second pilot signals included in the signal frames and compensates for the channel of the signal frame using the channel information.
[8] The apparatus according to paragraph 6, wherein orthogonal frequency division multiplex (OFDM) symbols included in the signal frames include symbol index information.
[9] The apparatus according to paragraph 8, wherein the service decoder identifies the position of service data using the symbol index information and decodes the identified service data.
[10] An apparatus for transmitting a signal, the apparatus comprising: a frequency splitter outputting a plurality of service data units according to frequency bands; a modulator modulating the output service data units; an inserter inserting first pilot signals and second pilot signals into frames including the modulated service data units; and a transmission unit transmitting the signal frame including the first pilot signals and the second pilot signals via radio frequency (RF) channels such that a time difference occurs.
[11] The apparatus according to paragraph 10, wherein the inserter inserts the first pilot signals and the second pilot signals into the frames such that the time difference occurs.

## Claims

1. A method of transmitting a signal, the method comprising:
mapping encoded service data to symbols;
interleaving the mapped symbols;
building a signal frame including the interleaved symbols and a preamble, the preamble including a first pilot signal and a second pilot signal, the first pilot signal indicating a fast Fourier transform, FFT, size of the second pilot signal and at least one guard interval length information matched with the FFT size, and the second pilot signal includes layer 1 information that includes a guard interval length information and a frequency indicator which is frequency information of a radio frequency, RF, channel; and
transmitting the signal frame including the first pilot signal and the second pilot signal,
wherein the first pilot signal is used for identifying the signal frame based on a structure of the first pilot signal,
wherein the structure of the first pilot signal includes a plurality of carriers including unused carriers and used carriers within 7.61 MHz signal bandwidth, and
wherein the used carriers occupy within 6.83Mhz signal bandwidth in the 7.61 MHz signal bandwidth,
wherein the second pilot signal is transmitted with the same FFT size and guard interval as the mapped symbols in the signal frame, and
wherein the number of OFDM symbols in the second pilot signal is signaled in the first pilot signal, and wherein the second pilot signal includes information on the number of OFDM symbols for the service data, and the layer 1 information further includes the number of signal fames.

## Patentansprüche

1. Verfahren zum Senden eines Signals, wobei das Verfahren umfasst:
Mappen von codierten Dienstdaten auf Symbole;
Verschachteln der dem Mappen unterzogenen Symbole;
Bilden eines Signal-Frames, einschließend die verschachtelten Symbole und eine Präambel, wobei die Präambel ein erstes Pilotsignal und ein zweites Pilotsignal einschließt, das erste Pilotsignal eine FFT-Größe (FFT = schnelle Fouriertransformierte) des zweiten Pilotsignals und mindestens eine an die FFT-Größe angepasste Schutzintervalllängeninformation angibt und das zweite Pilotsignal Schicht-1-Informationen einschließt, die eine Schutzintervalllängeninformation und einen Frequenzindikator, der Frequenzinformationen eines HF-Kanals (HF = Hochfrequenz) darstellt, einschließen; und
Senden des Signal-Frames, einschließend das erste Pilotsignal und das zweite Pilotsignal,
wobei das erste Pilotsignal zum Identifizieren des Signal-Frames auf der Grundlage einer Struktur des ersten Pilotsignals verwendet wird,
wobei die Struktur des ersten Pilotsignals eine Mehrzahl von Trägern einschließt, die unbenutzte Träger und benutzte Träger innerhalb einer 7,61-MHz-Signalbandbreite einschließt, und
wobei die benutzten Träger innerhalb einer 6,83-MHz-Signalbandbreite in der 7,61-MHz-Signalbandbreite liegen,
wobei das zweite Pilotsignal mit der gleichen FFT-Größe und dem gleichen Schutzintervall wie die dem Mappen unterzogenen Symbole in dem Signal-Frame gesendet wird und
wobei die Zahl der OFDM-Symbole in dem zweiten Pilotsignal in dem ersten Pilotsignal signalisiert wird und wobei das zweite Pilotsignal Informationen über die Zahl der OFDM-Symbole für die Dienstdaten einschließt und die Schicht-1-Informationen ferner die Zahl der Signal-Frames einschließen.

## Revendications

1. Procédé de transmission d'un signal, le procédé comprenant :
le mappage de données de service codées à des symboles ;
l'entrelacement des symboles mappés ;
la réalisation d'une trame de signal comportant les symboles entrelacés et un préambule, le préambule comportant un premier signal pilote et un second signal pilote, le premier signal pilote indiquant une taille d'une transformée de Fourier rapide, FFT, du second signal pilote et au moins une information de longueur d'intervalle de garde correspondant à la taille de la transformée FFT, et le second signal pilote comporte une information de couche 1 qui comporte une information de longueur d'intervalle de garde et un indicateur de fréquence qui est une information de fréquence d'un canal radiofréquence, RF ; et
la transmission de la trame de signal comportant le premier signal pilote et le second signal pilote, dans lequel le premier signal pilote est utilisé pour identifier la trame de signal sur la base d'une structure du premier signal pilote,
dans lequel la structure du premier signal pilote comporte une pluralité de porteuses comportant des porteuses inutilisées et des porteuses utilisées à l'intérieur de la largeur de bande de signal 7,61 MHz, et
dans lequel les porteuses utilisées occupent une largeur de bande de signal de 6,83 Mhz signal dans la largeur de bande de signal de 7,61 MHz,
dans lequel le second signal pilote est transmis avec la même taille de transformée FFT et le même intervalle de garde que les symboles mappés dans la trame de signal, et
dans lequel le nombre de symboles OFDM dans le second signal pilote est signalé dans le premier signal pilote, et dans lequel le second signal pilote comporte une information sur le nombre de symboles OFDM pour les données de service, et l'information de couche 1 comporte en outre le nombre de trames de signal.
